# EUROPÄISCHE PATENTSCHRIFT

(11) **EP 2 441 853 B1**
(45) Veröffentlichungstag und Bekanntmachung des Hinweises auf die Patenterteilung: **05.11.2014**
(21) Anmeldenummer: 11450118.2
(22) Anmeldetag: 08.09.2011
(51) Int. Cl.: C22C 33/04, C22C 38/18, C22C 38/22, C22C 38/24, C22C 38/30

(54) **Verfahren zur Herstellung von Werkzeugen aus legiertem Stahl und Werkzeuge insbesondere zur spanabhebenden Bearbeitung von Metallen**
Method for producing tools from steel alloy and tools, in particular for machining metal
Procédé de fabrication d'outils en acier allié et outils, notamment pour le traitement par enlèvement de copeaux de métaux

(30) Priorität: 18.10.2010 AT 17322010
(43) Veröffentlichungstag der Anmeldung: 18.04.2012
(73) Patentinhaber: BÖHLER Edelstahl GmbH & Co KG, 8605 Kapfenberg (AT)
(72) Erfinder: Kellezi, Gert, 8700 Leoben (AT); Caliskanoglu, Devrim, 35390 Giessen (DE); Bärnthaler, Andreas, 8641 St. Marein i.M. (AT)
(74) Vertreter: Wildhack & Jellinek

(56) Entgegenhaltungen:
- US-B1- 6 200 528

## Beschreibung

Die Erfindung bezieht sich auf ein Verfahren zur Herstellung von Werkzeugen für eine spanende Bearbeitung von metallischen Werkstoffen.

Weiters betrifft die Erfindung spanabhebende Werkzeuge.

Werkzeuge aus legiertem Stahl, insbesondere Schnellarbeitsstahl, mit einer chemischen Zusammensetzung in Gew.-% von

| | |
|---|---|
| Kohlenstoff (C) | 0.7 bis 1.3 |
| Silicium (Si) | 0.1 bis 1.0 |
| Mangan (Mn) | 0.1 bis 1.0 |
| Chrom (Cr) | 3.5 bis 5.0 |
| Molybdän (Mo) | 0.1 bis 10.0 |
| Wolfram (W) | 0.1 bis 19.0 |
| Vanadin (V) | 0.8 bis 5.0 |
| Cobalt (Co) | bis 8.0 |

sowie Aluminium, Stickstoff, Eisen und Verunreinigungselemente als Rest, sind im Wesentlichen bekannt.

Beispielsweise werden in der GB 2 096 171 A Schnellarbeitsstahllegierungen vorgeschlagen, deren Gehalt an den Elementen Vanadin, Wolfram und Molybdän einen Summenwert von 2 Gew.-% übersteigen soll, wobei in Weiterbildung der Erfindung die Konzentration an Silicium plus Aluminium unter einen Höchstwert von 3.5 Gew.-% einzustellen ist. Durch diese Maßnahmen soll eine vorteilhafte Wirkung auf die Werkzeugeigenschaften erzielt werden, welche sonst nur mittels Cobalt erreichbar erscheint.

Gemäß der US 2006/0180 249 A1 ist vorgeschlagen worden, einen niedriglegierten Schnellarbeitsstahl (C = 0.5 - 0.75 Gew.-%, Cr = 5.0 - 6.0 Gew.-%, W = 0.5 - 2.0 Gew.-%, V = 0.7 - 1.75 Gew.-%) mit Aluminium bis 0.1 Gew.-% und Stickstoff bis 0.04 Gew.-% zu legieren, wobei das Mo-Äquivalent 2.5 - 5.0 Gew.-% sowie der Wert Mo-Äquivalent gebrochen durch Vanadingehalt 2 bis 4 betragen sollen.

Einen komplex legierter Schnellarbeitsstahl, der vorteilhaft mit einem Sonderdesoxidationsverfahren herstellbar ist, offenbart die US 6 200 528 B1. Dieser Werkstoff, der verbesserte Hochtemperatureigenschaften haben soll, ist mit 0.03 bis 1.25 Gew.-% Aluminium legiert und weist Stickstoffgehalte von höher 0.03 bis höher 0.04 Gew.-% auf.

Der überwiegende Teil der vorgeschlagenen, mit Aluminium legierten Werkzeugstähle, insbesondere der Schnellarbeitsstähle, wird für eine Herstellung von spanenden Werkzeugen nicht eingesetzt. Es gibt zwar durchaus Hinweise, dass einzelne spezifische Werkzeugeigenschaften durch Aluminiumgehalte im Stahl gegebenenfalls bis 2 Gew.-% günstig beeinflusst werden können, allerdings scheint eine gewünschte Qualitätssicherheit und ein gesamtes hohes Güteprofil des Werkzeuges nicht im ausreichenden Maße bzw. nicht in überzeugender Weise vorzuliegen. Mit anderen Worten: In modernen Bearbeitungseinrichtungen ist durch die vorgesehenen Arbeitstechnologien das Werkzeug gleichzeitig einer Vielzahl von hohen mechanischen tribologischen und Verschleiß-Beanspruchungen auch bei erhöhter Temperatur ausgesetzt, wobei ein Versagen desselben in nur einer Beanspruchungsart einen zumindest in wirtschaftlicher Hinsicht aufwendigen Werkzeugersatz erfordert.

In der praktischen Anwendung werden vermutlich auch aus Gründen einer möglichen Güteunsicherheit mit Aluminium legierte Werkzeuge nur in geringem Maße eingesetzt.

Dem Fachmann ist bekannt, dass Aluminiumgehalte im Stahl das Gammagebiet im Zustandsschaubild stark einschnüren.

Kohlenstoff in Eisen-Aluminiumlegierungen erweitert das Gammagebiet, wobei jedoch die Löslichkeit für Kohlenstoff in y-Mischkristall durch Aluminium verringert wird.

Aluminiumgehalte im Werkzeugstahl können gemäß der Fachliteratur durch Nitrid-Ausscheidungen zur Feinkornbildung des Werkstoffes beitragen, wodurch allerdings bei einer thermischen Vergütung eine Einhärtetiefe in das Teil stark herabgesetzt sein kann.

Bei Schnellarbeitsstählen werden in Fachbüchern oftmals neben den Legierungselementen Chrom, Wolfram, Molybdän und Vanadin auch Titan- und/oder Tantal- und/oder Niobzusätze angeraten, um mit Aluminium und Stickstoff eine höhere Härtetemperatur beim Vergüten des Werkzeugs verwenden zu können, bzw. dessen Überhitzungsempfindlichkeit durch Grobkornbildung zu minimieren.

Aluminium im Schnellarbeitsstahl kann nach einer Vielzahl von Fachmeinungen nur gegebenenfalls die Fresserscheinungen an der Oberfläche des Werkzeuges verringern und im Bezug auf eine Auskolkung günstig wirken.

Bei umfassender kritischer Betrachtung einer Vielzahl von Dokumenten zum Stand der Technik sowie von Untersuchungsergebnissen sind diesen keine eindeutigen gesicherten Hinweise über die Wirkung von Aluminium in Werkzeugstählen entnehmbar, wobei auch Ursachen für einen vorzeitigen Ausfall oder einer offenbarten verlängerten Einsatzzeit eines mit Aluminium legierten Werkzeuges dem Fachmann nicht bekannt sind.

Allgemeine Untersuchungen haben gezeigt, dass mit steigenden Gehalten an Elementen der 4. und 5.Gruppe des Periodensystems (IUPAC 1988) und Kohlenstoff im Werkzeugstahl, Insbesondere im Schnellarbeitsstahl, der Anteil an Monokarbiden in diesem erhöht und derart die Verschleißfestigkeit des Werkzeugwerkstoffes verbessert werden können, wobei sich jedoch in nachteiliger Weise auf Grund der groben Karbidformation dadurch die Materialzähigkeit wesentlich verringert, sodass eine Bruch- und Ausbruchsgefahr des Werkzeuges erhöht ist.

Überdies bewirken Gehalte von Vanadin als wichtiges monokarbidbildendes Element bis ca. 5 Gew.-% in Anwesenheit von Elementen der Gruppe 6 des Periodensystems (JUPAC 1988), insbesondere von Molybdän bis 10 Gew.-%, gegebenenfalls von Wolfram bis 19 Gew.-% und Chrom bis 6 Gew.-% im Werkzeugstahl nur wenige harte verschleißfeste Monokarbide, wobei der hauptsächliche Karbidanteil im gehärteten Werkzeug im Wesentlichen als Mischkarbide vom Typ Me₂C sowie M₆C vorliegt, welche eine geringere Abriebfestigkeit als Monokarbide haben.

Hier will die Erfindung Abhilfe schaffen und setzt sich zum Ziel, ein Verfahren anzugeben, mittels welchem eine Herstellung von Werkzeugen mit verbesserter Verschleißfestigkeit und/oder höherer Zähigkeit des Werkzeugwerkstoffes im vergüteten Zustand bei Vermeidung von derzeit vom Fachmann ursächlich oft nicht genau zuordenbaren Werkzeugschäden erfolgen kann.

Weiters ist es Aufgabe der Erfindung, einen Werkzeugwerkstoff anzugeben, welcher jeweils nach einem thermischen Vergüten gesichert ein wesentlich verbessertes, gleichbleibend hohes Eigenschaftsprofil des spanabhebenden Werkzeuges aufweist.

Das Ziel wird mit dem erfindungsgemäßen Verfahren nach Anspruch 1 erreicht.

Durch Untersuchungen sowie Erprobungen des Werkstoffes hat sich gezeigt, dass in einem nach dem Stand der Technik fertig erschmolzenen, flüssigen Werkzeugstahl, insbesondere in einem Schnellarbeitsstahl, bei einem Legieren mit Aluminium im Ofen oder in der Pfanne grobe Nitride und Oxide gebildet werden, welche Einschlüsse bei einem Erstarren zu Blöcken weiter wachsen und kantige, grobe, nichtmetallische Partikel bilden, die nach einer Weiterverarbeitung zu Werkzeugen gerichtet bzw. inhomogen vorliegen und derart die Werkzeugeigenschaften nachteilig beeinflussen können.

Die mit dem erfindungsgemäßen Verfahren erzielten Vorteile sind nun darin zu sehen, dass durch die Zugabe von Aluminium die im Flüssigstahl gebildeten Nitride und Oxide koagulieren und abgeschieden werden können und derart der Stickstoff- und der Sauerstoffgehalt der Schmelze entscheidend vermindert werden. Dabei ist es wichtig, dass die Temperatur der Schmelze, die Liquidustemperatur, um mindestens 80°C höher liegt, um eine gewünschte Nitrid-, Oxid- oder Oxinitridbildung mit Aluminium zu erreichen. Höhere Überhitzungstemperaturen der Schmelze als 250°C sind reaktionskinetisch und gießtechnologisch ungünstig.

Aluminiumzugaben bis 0.4 Gew.-% bewirken eine Stickstoffabbindung und Oxidbildung im Flüssigmetall. Gehalte an Aluminium über 0.4 Gew.-% fördern ein Koagulieren der Stickstoffverbindungen sowie eine Vergröberung der Oxide und derart eine Abscheidung in eine aktive Schlacke, sodass mit Vorteil lediglich Einschlüsse mit einem Durchmesser von kleiner als 38 µm im Stahl verbleiben. Voraussetzung dafür ist jedoch eine turbulente Bewegung der Schmelze in der Pfanne bei einer Abdeckung mit aktiver Schlacke, welche Bewegung nach dem Stand der Technik durch Argonspülung oder durch magnetische Wanderfelder erreicht werden kann. Derart kann erfindungsgemäß der Stickstoffgehalt des Stahles auf unter 0.02 Gew.-% und der Sauerstoffgehalt auf unter 0.002 Gew.-% verringert werden.

Mit einem Zulegieren von Aluminium zur Schmelze und einem Bewegen derselben im metallurgischen Gefäß ist ein Einbringen von Magnesium in den Flüssigstahl erfindungswesentlich. Magnesium als Mikrolegierungselement wirkt einerseits morphogenetisch auf die Karbidausscheidung und andererseits auf die Ausbildung der Zusammensetzung der nichtmetallischen Einschlüsse im Werkzeugstahl.

Magnesium fördert, wie gefunden wurde, in vanadinhältigen Werkzeugstählen auch in geringen Konzentrationen die Bildung von Monokarbiden (MeC) und bewirkt dabei ein mengenmäßiges Zurückdrängen von Mischkarbiden vom Typ Me₂C, Mc₆C und von weiteren Karbiden mit geringem Kohlenstoffanteil. Mit anderen Worten: Magnesium erhöht die Kohlenstoffaktivität von Monokarbidbildenden Elementen in der Legierung und bewirkt derart einen höheren Anteil an feinen, harten Monokarbiden im Werkstoff, wodurch eine Verschleißfestigkeit desselben gefördert wird. Eine Steigerung der Festigkeit bei guter Zähigkeit der Matrix kann durch Mischkristallbildung erfolgen.

Bei einer weiteren Desoxidation und einer Entschwefelung des Flüssigstahles wirkt das eingebrachte Magnesium keimbildend für eine Magnesiumoxid- sowie eine magnesiumreiche Mischoxidausformung und eine Oxysulfid-Entstehung (MgO, MgAlO, MgCaO, Mg(AlCa)O, MgOS), wobei eine weitgehend homogene Verteilung von nichtmetallischen Einschlüssen mit geringer Größe im Werkzeugstahl erreicht wird. Größere magnesiumreiche Reaktionsprodukte in der Stahlschmelze können mittels deren Bewegung in die Schlacke ausgetragen werden.

Mögliche Tiegelreaktionen können, wie dem Fachmann bekannt ist, durch entsprechende Maßnahmen genützt werden.

Mit Vorteil kann bei einer Abscheidungsbehandlung von größeren Nitriden und/oder Oxiden sowie Oxinitriden und Sulfiden aus der Schmelze eine Zufuhr von Magnesium zu dieser erfolgen und dabei eine von der Schmelzenzusammensetzung abhängige Gießtemperatur des Stahles in der Pfanne eingestellt werden.

Ein Abguss zu Blöcken, in vorteilhafter Weise unter Schutzgas, und ein Weiterverarbeiten der erstarrten Blöcke zu Werkzeugvormaterial sowie die Herstellung von spanabhebenden Werkzeugen stellen im Wesentlichen übliche Erzeugungsschritte dar.

Ein Austenitisieren des Werkstoffes bei einer Temperatur von unter 1210°C und mindestens ein Anlassen des gehärteten Stahles im Temperaturbereich von 500°C bis 600°C sind vorteilhafte Herstellungsparameter.

Die weitere Aufgabe der Erfindung, einen Werkzeugwerkstoff anzugeben, welcher nach einem thermischen Vergüten eines daraus gebildeten Werkzeuges eine wesentlich erhöhte Standzeit desselben bei stärksten Beanspruchungen im praktischen Einsatz aufweist, wird mit einem Werkzeug, insbesondere Werkzeug für eine spanabhebende Bearbeitung von metallischen Werkstoffen, gebildet aus einem legierten Stahl mit einer chemischen Zusammensetzung in Gew.-% von

| | |
|---|---|
| Kohlenstoff (C) | 0.7 bis 1.3 |
| Silicium (Si) | 0.1 bis 1.0 |
| Mangan (Mn) | 0.1 bis 1.0 |
| Chrom (Cr) | 3.5 bis 5.0 |
| Molybdän (Mo) | 0.1 bis 10.0 |
| Wolfram (W) | 0.1 bis 19.0 |
| Vanadin (V) | 0.8 bis 5.0 |
| Cobalt (Co) | bis 8.0 |
| Aluminium (Al) | 0.4 bis 1.4 |
| Stickstoff (N) | 0.001 bis 0.012 |

Eisen (Fe) und herstellungsbedingte Verunreinigungen als Rest, welcher Werkzeugwerkstoff ein Härte von größer 66 HRC und eine homogene Verteilung von Nitrideinschlüssen mit einem maximalen Durchmesser von unter 38 µm sowie magnesiumreiche, nichtmetallische Einschlüsse und zwar vom Typ MgO, MgAlO, MgCaO, Mg(AlCa)O und MgOS mit einem maximalen Durchmesser der Verbindungen von 10 µm aufweist, gelöst.

Niedrige Stickstoffgehalte von unter 0.02 Gew.-% sowie homogen verteilte Nitride mit einem Durchmesser von unter 38 µm erhöhen die Zähigkeit des auf 66 HRC vergüteten Werkstoffes und verhindern weitgehend Werkzeugbrüche oder Schneidkantenausbrüche, die durch Rissinitiation der Kanten von groben Nitriden herrühren können.

Eine exakte Bestimmung bei Raumtemperatur von gelöstem Magnesium in einer Werkzeugstahllegierung erscheint wissenschaftlich noch nicht gelöst zu sein. Das Vorliegen von magnesiumreichen, nichtmetallischen Einschlüssen im Werkstoff vermittelt jedoch die Tatsache einer Wirkung auf Grund einer gewissen Löslichkeit von Magnesium im Stahl bei höheren Temperaturen. Durch einen Aluminiumgehalt von 0.4 bis 1.4 Gew.-% muss jedoch der gelöste Sauerstoff und dgl. Stickstoff im Werkzeugstahl derart gebunden sein, dass das eingebrachte Magnesium als Element eine Ausbildung von Monokarbid, insbesondere von Vanadinkarbid (VC), an welchem eine Härte von etwa 3000 HV_{0.02} gemessen wurde, intensiviert und dadurch diesen Anteil an harten Karbiden vergrößert bzw. die Verschleißfestigkeit des Werkzeuges erhöht.

Nach einer Ausführungsform der Erfindung ist ein Werkzeug bevorzugt, bei welchem der Werkzeugwerkstoff einen Gehalt in Gew.-% von

| | |
|---|---|
| Al | 0.5 bis 1.3 |

und/oder

| | |
|---|---|
| N | 0.005 bis 0.01 |

aufweist, die Nitride bei homogener Verteilung einen Durchmesser von kleiner 36 µm und die nichtmetallischen, magnesiumreichen Verbindungen einen maximalen Durchmesser von 8 µm oder kleiner haben.

Im Folgenden wird die Erfindung an Hand von Versuchsergebnissen und Untersuchungsbefunden näher erläutert.

In einem Vakuum- Induktionsofen wurde eine Vielzahl von Versuchslegierungen erschmolzen und zu Blöcken abgegossen, aus welchen Erprobungsstücke entnommen und nach gleicher Technologie auch Bohrwerkzeuge hergestellt wurden.

Mit thermisch auf eine Härte von über 66 HRC vergüteten Bohrern erfolgten auch bei schweren Betriebsbedingungen praktische Bohrversuche, bei welchen die maximal erreichbare Standzeit der Werkzeuge ermittelt wurde.

Um möglichst unbeeinflusst von den Aktivitäten der Legierungselemente in Wechselwirkung die Erfindung darzustellen, wurden drei Werkzeugstähle mit im Wesentlichen gleicher Zusammensetzung ausgewählt, welche Zusammensetzung der Tabelle 1 entnehmbar ist.

Die Versuchslegierungen S 630 B, S 630 C und S 630 D wurden mit ausgewähltem Schrott und reinen Einsatzstoffen erschmolzen. Nach dem Aufbringen einer flußspathältigen Schlacke auf die Schmelze erfolgte ein Desoxidieren und ein Spülen derselben mit Argon, um bei einer Einstellung der Gießtemperatur eine gewünschte Stahlbadbewegung zu erreichen.

Nach Einstellung der gewünschten Gießtemperatur erfolgte der Abguss der Schmelze S 630 B zu Blöcken.

Die weiteren Versuchsschmelzen S 630 C und S 630 D wurden gleich gefertigt, jedoch mit unterschiedlichen Mengen von Aluminium legiert, wobei und/oder danach ein Einbringen von Magnesium erfolgte.

Prinzipiell kann ein Zusatz von Magnesium zu einer Schlacke durch Tauchen von Magnesiumkomponenten, beispielsweise durch Einführen eines Fülldrahtes oder dgl. Mittel und/oder durch eine Tiegelreaktion, welche einem Fachmann bekannt ist, erfolgen. Ein Tauchen oder Einführen von Magnesium in den Flüssigstahl wird diesseits als sichere und zu bevorzugende Technologie angesehen.

Ein Abguss von Blöcken erfolgte wie bei der Schmelze S 630 B.

Eine genaue Zusammensetzung der Legierungen in Gegenüberstellung ist aus Tabelle 1 entnehmbar. Bei einem Vergleich der jeweiligen Konzentrationen der Elemente in den Versuchslegierungen ist festzustellen, dass höhere Aluminiumgehalte entscheidend niedrigere Sauerstoff- und Stickstoffkonzentrationen im Stahl bewirken.

An verformten Probenteilen der angegebenen Legierungen erfolgten Ermittlungen betreffend Existenz und Größe von magnesiumreichen nichtmetallischen Einschlüssen.

Die Untersuchungen erfolgten mit einem Rasterelektronen-Mikroskop:
REM Model: JEOL JSM 6490 HV
EDX Model: OXFORD INSTRUMENTSINCA-PENTAFET x3Si(Li) 30 mm²
Software: INCA ENERGY/FEATURE
mit einer Auswertung gemäß ASTM E 2142.

Wie die Daten aus Tabelle 2 betreffend S 630 C und S 630 D vermitteln, bewirkt ein Einbringen von Magnesium in die Schmelze eine Ausbildung von magnesiumreichen nichtmetallischen Einschlüssen, wodurch der Nachweis erbracht ist, dass zumindest bei Temperaturen über der Liquidustemperatur der Legierung geringe Mengen von Magnesium im Werkzeugstahl löslich sind.

Metallographische Untersuchungen der Legierungen S 630 B, S 630 C und S 630 D zeigten, dass ein Einbringen von Magnesium in die Schmelze zu einem vergrößerten Monokarbidanteil im vergüteten Werkstoff bei gleicher Konzentration von Kohlenstoff und den übrigen karbidbildenden Legierungselementen bewirkt.

Wie auch aus den Gefügebildern Fig. 1 bis Fig. 3 ersichtlich ist, sind die Anteile an Vanadinkarbid im Mg-behandelten Werkzeugstahl wesentlich erhöht. Wurden bei thermisch vergüteten Proben aus S 630 B (Fig. 1) weniger als 0.8 Vol.-% MC-Karbide, also Vanadinkarbide, bei einem Volumenanteil von über 3.3 Vol.-% an M₆C- und nadelförmige M₂C-Karbiden ermittelt, so ergaben die Untersuchungen an den Proben aus den durch Magnesiumzusätze behandelten Legierungen S 630 C (Fig. 2) und S 630 D (Fig. 3) einen Vanadin-(Monokarbid)anteil von über 3.0 Vol.-%.

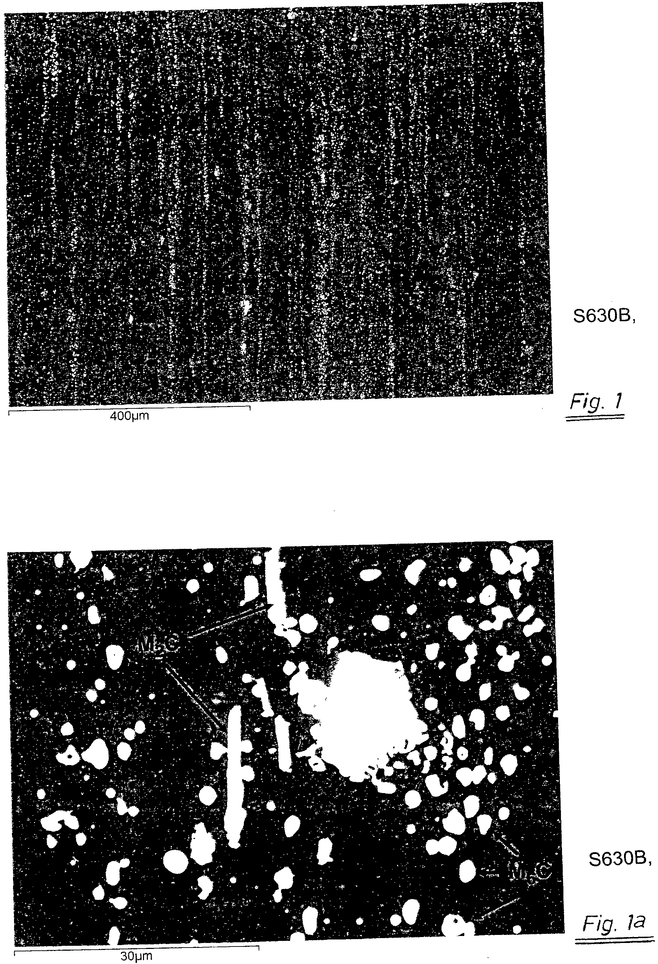

In den Figuren 1 bis 3 können die Gefügebestandteile auf Grund der Helligkeitstönung der Bereiche ermittelt werden. Diese sind:

| | |
|---|---|
| Grau | = Matrix |
| Weiß | = Metallkarbide vom Typ M₆C |
| Schwarz | = Nichtmetallische Einschlüsse |
| Hellgrau | = Monokarbide (VC) |

Fig. 1 zeigt die vergütete Legierung S 630 B im geätzten Schliffbild, aufweisend einen Anteil von weniger als 0.8 Vol.-% an Vanadinkarbid und einen Gehalt von mehr als 3.3 Vol.-% an M₂C- und M₆C-Karbiden.

Fig. 1 a zeigt einen Ausschnitt von Fig. 1 mit höherer Vergrößerung.

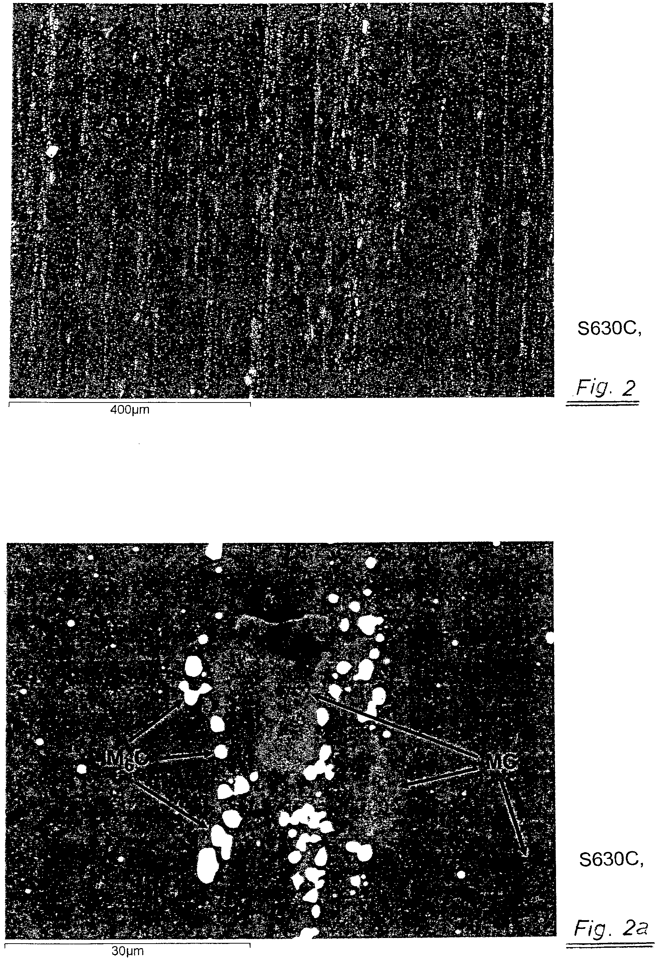

Fig. 2 vermittelt die Legierung S 630 C mit Magnesiumbehandlung in gleicher Darstellung, wobei der Anteil an Monokarbid bzw. Vanadinkarbid etwa 3.3 Vol.-% und jener an M₆C-Karbiden von bis zu 2.8 Vol.-% betragen.

Fig. 2a zeigt mit höherer Vergrößerung ein weitgehendes Fehlen von M₂C-Karbiden.

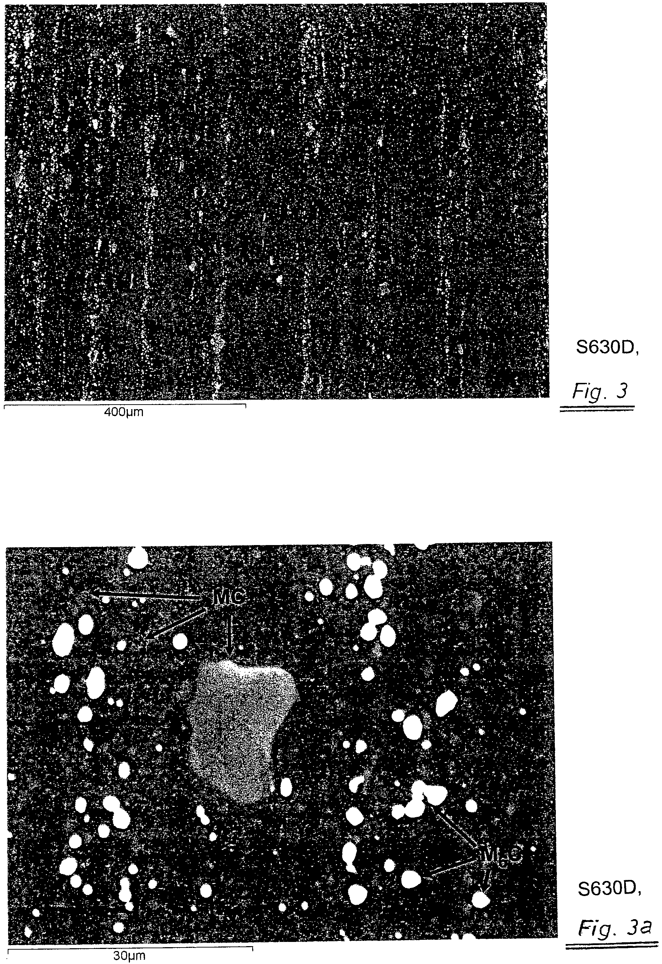

Fig. 3 zeigt die mit Magnesiumzusatz erschmolzene Legierung S 630 D, welche Proben einen MC-Karbidanteil von etwa 3.4 Vol.-% und M₆C-Karbide im Ausmaß von 2.7 Vol.-% aufweisen.

Fig. 3a vermittelt mit höherer Vergrößerung einen Ausschnitt von Fig. 3.

Die angegebenen Gefügeanteile sind Durchschnittswerte aus jeweils 18 Erprobungen.

Eine Wirkung von durch Magnesiumzusatz zum Werkstoff erzielten höheren Anteilen an hochharten MC-Typ-Karbiden bei verringerten Anteilen an Karbiden des M₆C-Typs und insbesondere des M₂C-Types sowie weitere geringere Kohlenstoffanteile aufweisende Karbide auf die Leistung von spanabhebenden Werkzeugen wurde mittels Bohrleistungsversuchen ermittelt.

Mit Bohrern, hergestellt aus den Werkstoffen gemäß den Bezeichnungen S 630 B, S 630 C und S 630 D, mit einem Durchmesser von 6 mm wurden Hohle mit einer Drehzahl von 12 m/min und einem Bohrfortschritt von 0.08 mm/Umdr, in einen Werkstoff 42 CrMo4 eingebracht.

Die Leistungswerte in % der Bohrer aus den jeweiligen Legierungen sind Durchschnittswerte aus jeweils 18 Versuchen, wobei die Leistung der Bohrer aus dem S 630 B-Werkstoff als Basiswert mit 100% festgelegt wurde.

Bohrer aus dem Werkstoff S 630 C erbrachten eine Bohrleistung von 210%, wobei mit Bohrern aus dem Werkstoff S 630 D eine Leistung von 240% erzielt werden konnte.

**Tab. 1**

| | | | | | | | | | | |
|---|---|---|---|---|---|---|---|---|---|---|
| **S630B** | **C** | **Al** | **O** | **Cr** | **Mo** | **V** | **W** | **Si** | **N** | **Co** |
| | 0,96 | 0,03 | 0,0022 | 4,29 | 4,02 | 1,96 | 3,98 | 0,400 | 0,027 | 0,370 |
| **S630C** | **C** | **Al** | **O** | **Cr** | **Mo** | **V** | **W** | **Si** | **N** | **Co** |
| | 0,96 | 0,53 | 0,00090 | 4,27 | 3,98 | 1,93 | 3,94 | 0,420 | 0,018 | 0,360 |
| **S630D** | **C** | **Al** | **O** | **Cr** | **Mo** | **V** | **W** | **Si** | **N** | **Co** |
| | 0,96 | 1,07 | 0,0016 | 3,95 | 4,07 | 1,94 | 3,95 | 0,430 | 0,012 | 0,320 |
| | | | | | | | | | | |
| **S630B** | **Mn** | **Zr** | **P** | **S** | **Cu** | **As** | **Ti** | **Nb** | **B** | **Ni** |
| | 0,300 | < 0,005 | 0,025 | 0,0012 | 0,150 | 0,008 | 0,007 | <0,005 | < 0,0005 | 0,320 |
| **S630C** | **Mn** | **Zr** | **P** | **S** | **Cu** | **As** | **Ti** | **Nb** | **B** | **Ni** |
| | 0,340 | < 0,005 | 0,024 | 0,0009 | 0,140 | 0,008 | 0,017 | 0,006 | 0,001 | 0,280 |
| **S630D** | **Mn** | **Zr** | **P** | **S** | **Cu** | **As** | **Ti** | **Nb** | **B** | **Ni** |
| | 0,310 | < 0,005 | 0,022 | 0,0007 | 0,120 | 0,007 | 0,011 | 0,005 | 0,001 | 0,260 |

**Tab. 2**

| | **S630B,** | | **S630C,** | | **S630D,** | |
|---|---|---|---|---|---|---|
| | Ø Breite (µm) | Ø Länge (µm) | Ø Breite (µm) | Ø Länge (µm) | Ø Breite (µm) | Ø Länge (µm) |
| MgO | - | - | 1.67 | 2.41 | 1.62 | 2.25 |
| MgAlO | - | - | 2.24 | 3.75 | 1.50 | 2.05 |
| MgCaO | - | - | 1.37 | 2.04 | 1.64 | 2.28 |
| Mg-(Al, Ca)O | - | - | 2.73 | 4.27 | 3.72 | 5.80 |
| Mg-OS | - | - | 1.73 | 2.50 | 1.52 | 2.07 |

## Patentansprüche

1. Verfahren zur Herstellung von Werkzeugen, insbesondere von Werkzeugen für eine spanabhebende Bearbeitung von metallischen Werkstoffen, gebildet aus einem legierten Stahl mit einer chemischen Zusammensetzung in Gew.-% von
| | |
|---|---|
| Kohlenstoff (C) | 0.7 bis 1.3 |
| Silicium (Si) | 0.1 bis 1.0 |
| Mangan (Mn) | 0.1 bis 1.0 |
| Chrom (Cr) | 3.5 bis 5.0 |
| Molybdän (Mo) | 0.1 bis 10.0 |
| Wolfram (W) | 0.1 bis 19.0 |
| Vanadin (V) | 0.8 bis 5.0 |
| Cobalt (Co) | bis 8.0 |
sowie Aluminium, Stickstoff, Eisen und Verunreinigungselemente als Rest, wobei in einem ersten Schritt eine Legierung mit obiger Zusammensetzung, ausgenommen das Element Aluminium, erschmolzen und auf eine Temperatur von 80 bis 250°C über die Liquidustemperatur erhitzt, desoxidiert und die Schmelzenoberfläche gegebenenfalls In der Pfanne mit einer ***flußspathältigen*** metallurgisch aktiven Oxide- und Nitride-lösenden Schlacke abgedeckt und diese zumindest im Grenzbereich zum Flüssigstahl aufgeschmolzen wird, wonach eine Zugabe in die Schmelze sowie ein homogenes Verteilen in dieser von 0.4 bis 1.4 Gew.-% Aluminium erfolgen, und die Stahlschmelze turbulent bewegt und derart Aluminiumnitride vom Flüssigstahl, mit einem Durchmesser von größer als 38 µm, in der Schlacke in Lösung gebracht bzw. im Stahl auf einen maximalen Durchmesser von 38 µm eingestellt, sowie der Stickstoffgehalt desselben auf unter 0.02 Gew.-% verringert werden, wobei ein Einbringen und Reagieren lassen von Magnesium in die bzw. in der Schmelze, mit der Maßgabe erfolgt, dass magnesiumreiche, nichtmetallische Einschlüsse bzw. Verbindungen und zwar vom Typ MgO, MgAlO, MgCaO, Mg(AlCa)O und MgOS gebildet, die Größe der Verbindungen auf einen Durchmesser von **kleiner** 10 µm eingestellt werden, eine Justierung auf eine gewünschte Gießtemperatur und ein Abguss der Schmelze zu Blöcken mit einem Erstarren derselben erfolgen, wonach in einem zweiten Schritt eine übliche Verarbeitung des Blockmaterials zu Gegenständen in einer gewünschten Werkzeugform durchgeführt wird und in einem dritten Schritt eine thermische Vergütung der geformten Werkzeuge mit mindestens einem einmaligen Austenitisieren des Werkstoffes bei einer Temperatur von jeweils unter 1210°C und mindestens einem Anlassen im Temperaturbereich von 500 bis 600°C und in der Folge eine Abspanung der Bearbeitungszugabe des Werkzeuges erfolgen.

2. Verfahren nach Anspruch 1, bei im ersten Schritt der desoxidierten Schmelze Aluminium mit einer Konzentration von 0.4 bis 1.3 Gew.-% zulegiert und die Größe der Aluminiumnitride auf einen Durchmesser von **kleiner** 34 µm eingestellt werden und ein Verringern des Stickstoffgehaltes des Stahles auf unter 0.02 Gew.-% erfolgt.

3. Verfahren nach Anspruch 1 oder 2, bei welchem die magnesiumreichen, nichtmetallischen Einschlüsse und zwar vom Typ MgO, MgAlO, MgCaO, Mg(AlCa)O und MgOS auf einen Durchmesser von **kleine**r 8 µm, eingestellt werden.

4. Verfahren nach Anspruch 1 bis 3, bei welchem im dritten Schritt ein Austenitisieren des Werkstoffes beim Härten bei einer Temperatur von 1200°C, vorzugsweise von höchstens 1160°C, mit einer Haltedauer auf dieser von höchstens 15 min. erfolgt.

5. Werkzeug, insbesondere Werkzeug für eine spanabhebende Bearbeitung von metallischen Werkstoffen, ***erhältlich nach einem Verfahren gemäß einem der Ansprüche 1 bis 4,*** gebildet aus einem legierten Stahl mit einer chemischen Zusammensetzung in Gew.-% von
| | |
|---|---|
| Kohlenstoff (C) | 0.7 bis 1,3 |
| Silicium (Si) | 0.1 bis 1.0 |
| Mangan (Mn) | 0.1 bis 1.0 |
| Chrom (Cr) | 3.5 bis 5.0 |
| Molybdän (Mo) | 0.1 bis 10.0 |
| Wolfram (W) | 0.1 bis 19.0 |
| Vanadin (V) | 0.8 bis 5.0 |
| Cobalt (Co) | bis 8.0 |
| Aluminium (Al) | 0.4 bis 1.4 |
| Stickstoff (N) | 0.001 bis 0.02 |
Eisen (Fe) und herstellungsbedingte Verunreinigungen als Rest, welcher Werkzeugwerkstoff ein Härte von größer 66 HRC und eine homogene Verteilung von Nitriden mit einem maximalen Durchmesser von unter 38 µm sowie magnesiumreiche, nichtmetallische Einschlüsse und zwar vom Typ MgO, MgAlO, MgCaO, Mg(AlCa)O und MgOS mit einem Durchmesser der Verbindungen von **kleiner** 10 µm aufweist.

6. Werkzeug nach Anspruch 5, bei der Werkzeugwerkstoff einen Gehalt in Gew.-% von
| | |
|---|---|
| Al | 0.5 bis 1.3 |
und/oder
| | |
|---|---|
| N | 0.005 bis 0.02 |
aufweist, die Nitride bei homogener Verteilung einen Durchmesser von kleiner 34 µm und die nichtmetallischen, magnesiumreichen Verbindungen einen Durchmesser von **kleiner** 8 µm oder kleiner haben.

## Claims

1. A method for producing tools, particularly tools for machining metallic materials consisting of an alloy steel having a chemical composition, in wt%, of
| | |
|---|---|
| carbon (C) | 0.7 to 1.3 |
| silicon (Si) | 0.1 to 1.0 |
| manganese (Mn) | 0.1 to 1.0 |
| chromium (Cr) | 3.5 to 5.0 |
| molybdenum (Mo) | 0.1 to 10.0 |
| tungsten (W) | 0.1 to 19.0 |
| vanadium (V) | 0.8 to 5.0 |
| cobalt (Co) | up to 8.0 |
as well as aluminum, nitrogen, iron and impurities as balance, wherein, in a first step, an alloy having the above composition, excluding the element of aluminum, is molten and heated to a temperature of from 80 to 250 °C above the liquidus temperature, deoxidized, and the melt surface is optionally covered in the pan with a fluor-spar-containing, metallurgically active slag dissolving oxides and nitrides, which is molten at least in the region bordering the liquid steel, whereafter 0.4 to 1.4 wt% of aluminum are added to the melt and homogeneously distributed therein, the steel melt is agitated in a turbulent manner in order to dissolve aluminum nitrides of the liquid steel, having a diameter of more than 38 µm in the slag or to adjust them to a maximum diameter of 38 µm in the steel, respectively, as well as to reduce the nitrogen content thereof to less than 0.02 wt%, wherein adding magnesium to and reacting the same in the melt is done with the proviso that magnesium-rich, non-metallic inclusions or compounds of the types of MgO, MgAlO, MgCaO, Mg(AlCa)O and MgOS are formed, the size of the compounds is adjusted to a diameter of less than 10 µm, a desired casting temperature is adjusted, and the melt is casted into blocks and the latter are solidified, whereafter, in a second step, conventional processing of the block material into objects having a desired tool shape is carried out and, in a third step, the formed tools are thermally hardened and tempered, with the material being austenized at least once at a temperature below 1210 °C each and being tempered in a temperature range of from 500 to 600 °C, followed by machining of the machining allowance of the tool.

2. The method according to claim 1, wherein, in the first step, aluminum is blended into the deoxidized melt at a concentration of 0.4 to 1.3 wt%, and the size of the aluminum nitrides is adjusted to a diameter of less than 34 µm, and the nitrogen content of the steel is reduced to less than 0.02 wt%.

3. The method according to claim 1 or 2, wherein the magnesium-rich, non-metallic inclusions of the type of MgO, MgAlO, MgCaO, Mg(AlCa)O and MgOS are adjusted to a diameter of less than 8 µm.

4. The method according to any one of the claims 1 to 3, wherein, in the third step, the material is austenized during hardening at a temperature of 1200 °C, preferably at a maximum of 1160 °C, with a holding time at this temperature of a maximum of 15 min.

5. A tool, in particular a tool for machining metallic materials, obtainable according to the method of any one of the claims 1 to 4, consisting of an alloy steel having a chemical composition, in wt%, of
| | |
|---|---|
| carbon (C) | 0.7 to 1.3 |
| silicon (Si) | 0.1 to 1.0 |
| manganese (Mn) | 0.1 to 1.0 |
| chromium (Cr) | 3.5 to 5.0 |
| molybdenum (Mo) | 0.1 to 10.0 |
| tungsten (W) | 0.1 to 19.0 |
| vanadium (V) | 0.8 to 5.0 |
| cobalt (Co) | up to 8.0 |
| aluminum (Al) | 0.4 to 1.4 |
| nitrogen (N) | 0.001 to 0.02 |
iron (Fe) and production-related impurities as balance,
which tool material has a hardness of more than 66 HRC and a homogeneous distribution of nitrides having a maximum diameter of less than 38 µm as well as magnesium-rich, non-metallic inclusions of the types of MgO, MgAlO, MgCaO, Mg(AlCa)O and MgOS, having a compound diameter of less than 10 µm.

6. The tool according to claim 5, wherein the tool material has a content, in wt%, of
| | |
|---|---|
| Al | 0.5 to 1.3 |
and/or
| | |
|---|---|
| N | 0.005 to 0.02, |
the nitrides are homogeneously distributed and have a diameter of less than 34 µm, and the non-metallic, magnesium-rich compounds have a diameter of less than 8 µm or less.

## Revendications

1. Procédé pour produire des outils, notamment des outils pour traiter des matériaux métalliques comprenant un acier allié avec une composition chimique, en % en poids, de
| | |
|---|---|
| Carbone (C) | 0,7 à 1,3 |
| Silicium (Si) | 0,1 à 1,0 |
| Manganèse (Mn) | 0,1 à 1,0 |
| Chrome (Cr) | 3,5 à 5,0 |
| Molybdène (Mo) | 0,1 à 10,0 |
| Tungstène (W) | 0,1 à 19,0 |
| Vanadium (V) | 0,8 à 5,0 |
| Cobalt (Co) | jusqu'à 8,0 |
ainsi que de l'aluminium, de l'azote, du fer et des impuretés comme reste; dans un premier pas, un alliage présentant la composition ci-dessus, exclu l'élément aluminium, étant fondu et chauffé à une température de 80 à 250 °C au-dessus de la température de liquéfaction, désoxydé, et la surface de fusion étant optionnellement couverte dans la cuvette avec une scorie comprenant du spath fluor, métallurgiquement active et dissolvent des oxydes et des nitrures, celle-ci étant fondue au moins dans la zone limite proche de l'acier liquide, ensuite 0,4 à 1,4 % en poids d'aluminium étant ajoutés à la fusion et distribués de façon homogène là-dedans, la fusion d'acier étant agité de façon turbulente pour dissoudre des nitrures d'aluminium de l'acier liquide, présentant un diamètre supérieur à 38 µm, dissolus dans la scorie ou réglés dans l'acier à un diamètre maximal de 38 µm, ainsi que la teneur en azote de celui-ci étant réduite à moins de 0,02 % en poids, une addition et réaction de magnésium dans la fondue étant effectuées à condition que des inclusions et des composés riches en magnésium, non-métalliques, du type MgO, MgAlO, MgCaO, Mg(AlCa)O et MgOS sont formées, la dimension des composés étant ajustée à un diamètre de moins de 10 µm, une température de coulée souhaitée étant ajustée, et la fondue étant coulée dans des blocs, ceux-ci étant solidifiés, après quoi, dans un deuxième pas, un traitement conventionnel du matériau en bloc pour obtenir des objets avec une dimension souhaité d'outil étant effectué, et, dans un troisième pas, les outils formés étant soumis à un raffinement thermique, étant soumis au moins une fois à austénitisation à une température respective inférieure à 1210 °C, et au moins une fois à recuit à une température comprise entre 500 et 600 °C, et ensuite effectuant un traitement des surépaisseurs de l'outil.

2. Procédé selon la revendication 1, dans le premier pas de l'aluminium étant ajouté par alliage à la fondue désoxydée, à une concentration de 0,4 à 1,3 % en poids, et la dimension des nitrures d'aluminium étant ajustée à un diamètre de moins de 34 µm, et la teneur d'azote de l'acier étant réduit à moins de 0,02 % en poids.

3. Procédé selon les revendications 1 ou 2, les inclusions riches en magnésium, non-métalliques, du type MgO, MgAlO, MgCaO, Mg(AlCa)O et MgOS étant ajustées à un diamètre de moins de 8 µm.

4. Procédé selon une des revendications 1 à 3, dans le troisième pas le matériau étant austenitisé pendant le durcissement à une température de 12000 °C, de préférence à 1160 °C au maximum, avec une durée de maintien à celle-ci de 15 min au maximum.

5. Outil, notamment un outil pour traiter des matériaux métalliques, pouvant être obtenu selon le procédé d'une des revendications 1 à 4, comprenant un acier allié avec une composition chimique, en % en poids, de
| | |
|---|---|
| Carbone (C) | 0,7 à 1,3 |
| Silicium (Si) | 0,1 à 1,0 |
| Manganèse (Mn) | 0,1 à 1,0 |
| Chrome (Cr) | 3,5 à 5,0 |
| Molybdène (Mo) | 0,1 à 10,0 |
| Tungstène (W) | 0,1 à 19,0 |
| Vanadium (V) | 0,8 à 5,0 |
| Cobalt (Co) | jusqu'à 8,0 |
| Aluminium (Al) | 0,4 à 1,4 |
| Azote | 0,001 à 1,4, |
Du Fer (Fe) et des impuretés comme reste, ledit matériau d'outil présentant une dureté supérieure à 66 HRC et une distribution homogène de nitrures avec un diamètre maximal de moins de 38 µm ainsi que des inclusions riches en magnésium, non-métalliques, du type MgO, MgAlO, MgCaO, Mg(AlCa)O et MgOS avec un diamètre des composés inférieur à 10 µm.

6. Outil selon la revendication 5, le matériau d'outil présentant une teneur, en % en poids, de
| | |
|---|---|
| Al | 0,5 à 1,3 |
et/ou
| | |
|---|---|
| N | 0,005 à 0,02 |
les nitrures, distribués de façon homogène, présentant un diamètre inférieur à 34 µm, et les composés non-métalliques, riches en magnésium présentent un diamètre inférieur à 8 µm ou moins.
